# EUROPEAN PATENT APPLICATION

(11) **EP 3 847 933 A1**
(43) Date of publication of application: **14.07.2021**
(21) Application number: 20217637.6
(22) Date of filing: 29.12.2020
(51) Int. Cl.: A47J 37/06

(54) **ELECTRIC GRILL FOR BARBECUE WITH A CARBON RESISTOR**

(30) Priority: 07.01.2020 IT 202000000094
(71) Applicant: DP Company Srl, 31100 Treviso (TV) (IT)
(72) Inventor: CONESTABO, Marco, 31100 TREVISO (TV) (IT)
(74) Representative: Burchielli, Riccardo

(57) **Abstract**

Described is an electric grill (1) for barbecues, comprising an external structure (2), which contains a half-muffle (3) made of heat-insulating material, the half-muffle (3) contains a heating device, comprising inert material (4) with at least one electrical resistor made of carbon filaments (7) incorporated inside. Above the half-muffle (3) is a stainless steel frame (5), on which a lava stone (6) is placed. The stainless steel frame (5) and the lava stone (6) make up the hob or hotplate of the electric grill (1).

## Description

This invention relates to an electric grill for a barbecue, designed for cooking food, which is powered by one or more carbon filament resistors.

In particular, the invention relates to an electric grill with an external structure made of stainless steel, designed to contain an element made of thermo-insulating material housing an inert material inside of which one or more resistors made of carbon filaments are placed.

Above the inert material there is a stainless steel frame on which a slab of lava stone is placed to serve as a hob or hotplate; the food to be cooked is placed, in turn, on the above-mentioned hotplate.

The electric grill according to the invention is constructed of four separate elements, which can be moved for cleaning or replacement in case of malfunction.

These elements are:
- a stainless steel external structure;
- a block of insulating material (half-muffle);
- a block of inert material and carbon resistors (heating device);
- a stainless steel frame with lava stone (hob or hotplate).

There are currently several types of grills for barbecues on the market with the hob or hotplate made of stainless steel or cast iron or lava stone or soapstone.

In order to bring these hobs or hotplates up to the required temperature, two heating systems are normally used, which are placed directly underneath the hob or hotplate, such as:
(a) copper electrical resistors,
(b) one or more gas burners.

However, classic copper resistors and/or gas burners bring the heat (to heat the hob or hotplate) directly to the area corresponding to the one where they are positioned, whilst at their sides the heat is always lower, resulting in uneven heating of the entire hob or hotplate, with the consequent drawbacks of longer and uneven cooking of the food and, sometimes, breakage of the hob or hotplate in the case of using a lava stone or soapstone as a hob or hotplate.

In order to overcome this problem, the solution identified by the invention is to use a resistor with a resistive cable made up of flexible carbon filaments, which make it possible to create a structure designed to cover the entire area to be heated.

In this way, it is possible to obtain homogeneous heat over the entire surface of the hob or hotplate in less time than the prior art.

In addition, the causes of possible breakage of lava stones or soapstone when they are used for the hob or hotplate are reduced.

The use of carbon resistors to heat hobs is also mentioned in Italian patent no. 102007901563241, where some construction methods of the resistive cable made of flexible carbon filaments are also illustrated.

However, the construction method of the electric grill according to the invention differs from the above-mentioned prior art, in that the above-mentioned electric grill allows the replacement of both the heating device (here formed by inert material and carbon resistors) and the hob or hotplate (here formed by a stainless steel frame with lava stone).

In addition, the possibility of moving the three other construction elements mentioned above from the external stainless steel structure allows for better cleaning of them and of the external structure, thus allowing the functionality and efficiency of the electric grill to be maintained for a longer period of time, thus achieving effective savings for the owner and/or user.

Further features and advantages of the invention will become more apparent from the following description of a preferred, non-limiting, example embodiment of an electric grill for barbecues, designed for cooking food and powered by carbon filament resistors, according to the invention.

The above-mentioned technical features and advantages are also evident from the attached drawings, also provided by way of a preferred, non-limiting example, wherein:

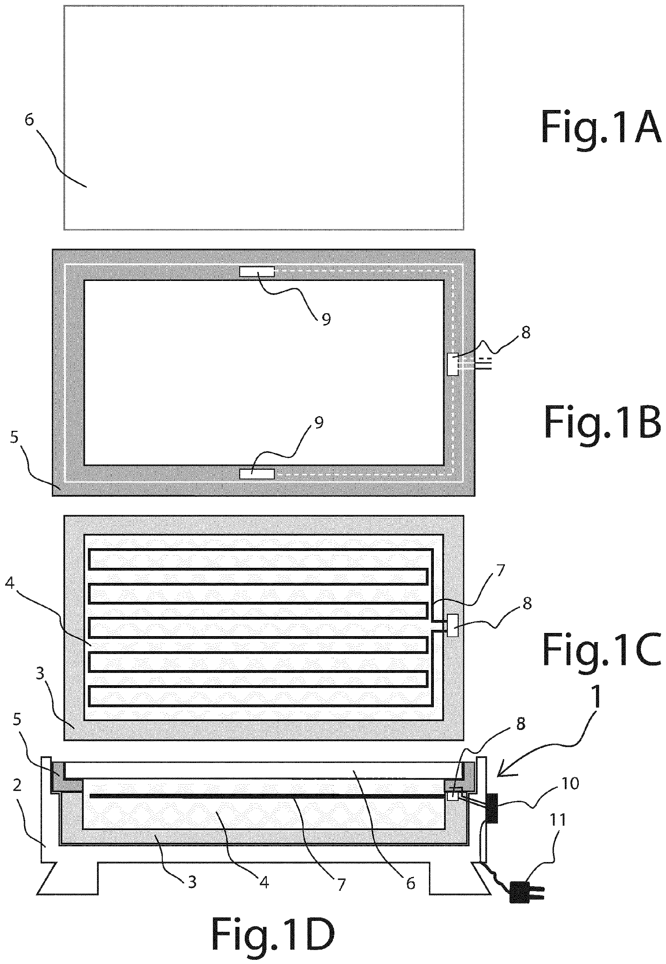

- Figure 1A shows a plan view from above of a lava stone support used in the electric grill for barbecues according to the invention;
- Figure 1B shows a plan view from above of the stainless steel frame designed for accommodating the lava stone, thus determining the hob or hotplate used in the electric grill for barbecues according to the invention;
- Figure 1C shows a plan view from above of the half-muffle made of thermo-insulating material, incorporating the inert material with the electrical resistor inside, used in the electric grill for barbecues according to the invention;
- Figure 1D shows a cross-section view of the electric grill for barbecues according to the invention.

With reference to the above-mentioned drawings, the electric grill (1) for barbecues, which is the object of the invention, comprises an external structure (2), preferably made of stainless steel, designed for containing a half-muffle made of heat-insulating material (3).

The half -muffle (3) contains the heating device consisting of inert material (4) with at least one electrical resistor inside (preferably shaped like a coil) made of carbon filaments (7).

Above the half -muffle (3) is a stainless steel frame (5), on which the lava stone (6) is placed.

The frame (5) and the lava stone (6) make up the hob or hotplate of the electric grill (1).

The stainless steel frame (5) can be fitted with seats for temperature sensors (9).

The carbon filament electrical resistor (7) is also closed by means of a Faston type element (8) to enable it to be connected to a power regulator (10), while the temperature probes (9) are connected to a display, which shows the temperature of the hob or hotplate and enables the user to operate the power regulator (10) to increase or decrease the power of the electrical resistor (7).

The electrical device which regulates the power is powered by electricity with a mains connection via a connector (11).

In practice, the user, after connecting the electric grill (1) to the mains supply using the connector (11), is able to bring the hob or hotplate to the required temperature by operating the power regulator (10) and adjusting the temperature based on the data shown on the display.

Once the cooking phase is complete, the user can easily remove the hob or hotplate by acting on the stainless steel frame (5), which holds the lava stone (6), for proper cleaning.

If the carbon filament electrical resistor (7) is faulty and needs to be replaced, it is sufficient to insert a new inert material (4) complete with the above-mentioned electrical resistor (7).

The invention described can be modified and adapted in several ways without thereby departing from the scope of the inventive concept expressed in the accompanying claims.

Moreover, all the details may be replaced by other technically equivalent elements and the materials used, provided they are compatible with the specific use, as well as the dimensions, may vary according to the requirements and the prior art.

Where the characteristics and the techniques mentioned in the following claims are followed by reference signs, the reference signs have been used only with the aim of increasing the intelligibility of the claims themselves and, consequently, the reference signs do not constitute in any way a limitation to the interpretation of each element identified, purely by way of example, by the signs numbers.

## Claims

1. Electric grill (1) for barbecue, comprising an external structure (2) which contains a half-muffle made with an heat-insulating material (3), **characterized in that** said half-muffle (3) contains a heating device, which is composed of inert material (4) with at least one embedded electric resistor made of carbon filaments (7), above said half-muffle (3) being placed a stainless steel frame (5), on which a lava stone is positioned (6), said frame (5) and said lava stone (6) being configured to constitute a hob or cooking plate of said electric grill (1).

2. Electric grill (1) as claimed in claim 1, **characterized in that** said electric resistor made of carbon filaments (7) is shaped as a serpentine.

3. Electric grill (1) as claimed in at least one of the preceding claims, **characterized in that** seats are provided on said stainless steel frame (5), said seats being configured to incorporate respective temperature probes (9).

4. Electric grill (1) as claimed in at least one of the preceding claims, **characterized in that** said electric resistor made of carbon filaments (7) is closed by means of a fastening element (8) and is connected, by means of said fastening element (8), to a power regulator (10), said power regulator (10) being connected to the power supply network through a connector (11).

5. Electric grill (1) as claimed in at least one of the preceding claims, **characterized in that** said temperature probes (9) are connected to a display, which displays the temperature of said hob or cooking plate and the power supplied by said electric resistor made of carbon filaments (7).

6. Electric grill (1) as claimed in at least one of the preceding claims, **characterized in that** said hob or cooking plate is removable by acting on said stainless steel frame (5) for cleaning.

7. Electric grill (1) as claimed in at least one of the preceding claims, **characterized in that** said inert material (4), together with said electric resistor made of carbon filament (7), are removable and replaced by acting on said hob or cooking plate consisting of said stainless steel frame (5) and said lava stone (6).
